# EUROPÄISCHE PATENTSCHRIFT

(11) **EP 1 902 822 B1**
(45) Veröffentlichungstag und Bekanntmachung des Hinweises auf die Patenterteilung: **12.02.2014**
(21) Anmeldenummer: 07018437.9
(22) Anmeldetag: 20.09.2007
(51) Int. Cl.: B27G 19/02, B23D 59/00, F16P 1/04

(54) **Sicherheitseinrichtung für Kreissägeblatt oder dgl.**
Safety device for circular saw blade or similar
Dispositif de sécurité pour lame de scie circulaire ou analogue

(30) Priorität: 25.09.2006 AT 69906 U
(43) Veröffentlichungstag der Anmeldung: 26.03.2008
(73) Patentinhaber: HOKUBEMA Maschinenbau GmbH, 72505 Krauchenwies (DE)
(72) Erfinder: Waldraff, Siegfried, 88356 Ostrach (DE); Timko, Josef, 72488 Sigmaringen (DE)
(74) Vertreter: Patentanwälte Westphal, Mussgnug & Partner

(56) Entgegenhaltungen:
- EP-A- 0 007 796
- BE-A1- 767 651
- DE-U1- 20 103 373
- GB-A- 563 705
- NL-A- 6 900 153
- US-A- 1 904 005

## Beschreibung

Die Erfindung betrifft eine Sicherheitseinrichtung gemäß dem Oberbegriff des Anspruchs 1. Eine solche Einrichtung ist aus NL 6900153 A bekannt.

Eine wichtige Sicherheitseinrichtung bei allen stationär eingesetzten Kreissägemaschinen ist die Schutzhaube, die den Zahnkranz eines laufenden Kreissägeblattes so weit als möglich abdecken sollte und somit den Bediener der Kreissägemaschine vor einer unbeabsichtigten Berührung des Kreissägeblatts schützt.

Eine derartige Schutzhaube ist aus DE 201 03 373 U1 bekannt. Diese offenbart eine Schutzvorrichtung für eine Stand-Kreissäge, mit einer Schutzhaube, die an einem höhenverstellbaren Arm befestigt ist und ein Sägeblatt mindestens teilweise umschließt. Die Schutzhaube ist dabei an dem Arm formschlüssig befestigt und ohne Werkzeug auswechselbar. Dadurch kann einfach zwischen Schutzhauben mit verschiedenen Innenkonturen gewechselt werden, wie sie z.B. für Schrägschnitte mit schräg gestellten Sägeblättern erforderlich sind.

Aus dem Stand der Technik ist weiters bekannt, dass bei derartigen Schutzhauben die Seitenwände auswechselbar sind, um, wie zuvor erwähnt, die Innenkontur der Schutzhaube an ein schräg gestelltes Sägeblatt anzupassen. Dazu wird an Seite, zu der hin das Sägeblatt geneigt wird, ein ebenes Seitenwandelement durch ein Seitenwandelement mit einer Ausbuchtung ersetzt und dadurch eine vergrößerte Innenkontur geschaffen. Nachteilig bei diesen erwähnten Methoden ist, dass zur Anpassung der Schutzhaube an schräg gestellte Sägeblätter Teile der Schutzhaube oder die gesamte Schutzhaube ausgewechselt werden müssen, was eine Verlängerung der Rüstzeit bedeutet, insbesondere wenn das für den Umbau benötigte Austauschelement nicht im Griffbereich der Kreissäge vorhanden sind.

Eine Möglichkeit dieses Auswechseln von Bestandteilen der Schutzhaube zu vermeiden ist aus NL 6 900 153 A bekannt, wonach eine Schutzhaube zwei zu einem Kreissägeblatt parallele, jedoch asymmetrisch distanzierte Seitenwände aufweist und bezüglich einer von der Symmetrieebene zwischen den Seitenwänden distanzierte vertikale Schwenkachse verschwenkbar an einem mit einem an einem Tragarm befestigten Tragelement gelagert ist, wodurch die Seitenwände in ihrer asymmetrischen Lage bezüglich des Kreissägeblattes vertauschbar sind. Dadurch kann ein für die Schrägstellung erforderlicher vergrößerter seitlicher . Freiraum in der Schutzhaube an verschiedenen Seiten des Kreissägeblatts bereitgestellt werden, ohne dass Komponenten der Schutzhaube ausgewechselt werden müssten.

Aufgabe der Erfindung ist es, eine Schutzhaube für eine Kreissägemaschine, die sowohl für den Einsatz mit einem gerade stehenden Sägeblatt als auch für die Verwendung mit einem schräg gestellten Sägeblatt geeignet ist und ein einfaches Umrüsten zwischen verschiedenen Richtungen der Schrägstellung des Kreissägeblatts ermöglicht zu verbessern.

Diese Aufgabe der Erfindung wird durch eine Sicherheitseinrichtung mit den Merkmalen im Kennzeichenteil des Anspruchs 1 gelöst.

Dadurch dass das Tragelement, an dem die Schutzhaube befestigt ist, als ein die Seitenwände radial umfassender Tragrahmen ausgebildet ist, der eine hohe mechanische Festigkeit aufweist und die Schutzhaube vor möglichen Beschädigungen an ihrem Außenumfang bewahrt. Weiters können an diesem Tragrahmen zusätzliche Funktionselemente angeordnet werden, wie z.B. ein Absaugstutzen, Sicherungselemente für die Schwenklage der Schutzhaube, ein Handgriff, eine Einlaufrolle bzw. eine Auslaufrolle und dgl.

Das Verbindungselement stellt einerseits den erforderlichen Abstand zwischen den Seitenwänden her und ermöglicht, die Anordnung der Schwenkachse zwischen den Seitenwänden. Das zumindest eine Verbindungselement kann weiters eine sich von der ersten Seitenwand zur zweiten Seitenwand erstreckende Umfangswand bilden, die die Schutzhaube in radialer Richtung begrenzt. Diese Umfangswand kann dabei eine durchgehende, geschlossene Fläche sein, jedoch auch Funktionsöffnungen, beispielsweise für eine Absaugung des Schutzhaubeninnenraums, aufweisen.

Zusätzlich kann die Umfangswand der Schutzhaube durch den Tragrahmen gebildet sein, d.h. die Schutzhaube umfasst die mit dem Verbindungselement verbundene Seitewände, jedoch keine Fläche, die die Schutzhaube in radialer Richtung abschließt. Der radiale Abschluss in Form der Umfangswand wird in diesem Fall durch den Tragrahmen gebildet.

Das Verbindungselement kann weiters einstückig mit zumindest einer Seitenwand verbunden sein, d.h. an dieser angeformt sein, was eine Reduktion der Teileanzahl bedeutet und eine wirtschaftlichere Herstellung der Schutzhaube ermöglicht.

Die Schutzhaube, umfassend die erste Seitenwand, die Umfangswand und die zweite Seitenwand kann jedoch auch zur Gänze einstückig ausgeführt sein, wodurch ein Montageaufwand bei der Herstellung der Schutzhaube vermieden ist.

Zur Erleichterung für den Bediener ist es von Vorteil, wenn eine Seitenwand und/oder die Umfangswand zumindest abschnittsweise aus transparentem Material gebildet ist. Dadurch besteht die Möglichkeit, den Schnittbereich der Kreissäge für den Bediener einsehbar zu machen. Das transparente Material kann dabei durch jedes lichtdurchlässige Material ausreichender Festigkeit gebildet sein, beispielsweise aus Glas oder transparenten Kunststoffen, wie z.B. Acrylglas.

Eine besonders wirtschaftliche Herstellung der Schutzhaube ist gegeben, wenn dazu ein Kunststoffspritzgießverfahren eingesetzt wird.

Damit die Seitenwände der Schutzhaube in beiden Schwenkstellungen die richtigen Abstände zum Kreissägeblatt aufweisen, ist es von Vorteil, wenn die Schwenkachse zumindest annähernd in der Ebene des Kreissägeblattes in Geradstellung verläuft. Da die Abstände der Seitenwände zum Kreissägeblatt in Geradstellung zumindest einige Zentimeter betragen, ist auch bei schwankender Sägeblattdicke eine Berührung des Kreissägeblatts mit der Schutzhaube vermieden, wenn die Schwenkachse im Bereich der Kreissägeblattebene in Geradstellung verläuft.

Da eine Unterkante der Schutzhaube in beiden Schwenkstellungen möglichst parallel zu einem Auflagetisch der Kreissäge verlaufen soll, ist es von Vorteil, wenn die Schwenkachse rechtwinkelig zu der Unterkante der Schutzhaube verläuft.

Wenn die Schwenklage der Schutzhaube bezüglich des Tragelements durch eine Sicherungsvorrichtung fixierbar ist, ist vermieden, dass die Schutzhaube im Betrieb der Kreissäge unbeabsichtigt verschwenkt wird und eine Berührung zwischen der Schutzhaube und dem Kreissägeblatt erfolgt. Die Fixierung kann dabei vorteilhaft nur in den beiden Arbeitsstellungen der Schutzhaube, also den Endlagen der Schwenkbewegung durchgeführt werden.

Eine einfache Form der Sicherungsvorrichtung kann darin bestehen, dass diese zumindest einen, in einer Sperrstellung das Tragelement und die Schutzhaube durchsetzenden, Sicherungsstift umfasst. Dadurch wird die richtige Position der Schutzhaube in einer der beiden einsetzbaren Schwenklagen durch Formschluss sichergestellt.

Zur zuverlässigen Fixierung des Sicherungsstifts in einer die Schutzhaube fixierenden Sperrstellung kann dieser durch ein Federelement in Richtung seiner Längsachse federnd im Tragelement gelagert sein. Zum Verschwenken der Schutzhaube muss der Sicherungsstift dabei durch den Bediener entgegen der Federkraft aus seiner Sperrstellung bewegt werden und kann dieser nach Beendigung der Schwenkbewegung wieder in eine entsprechende Ausnehmung bzw. Bohrung der Schutzhaube eingreifen.

Um einen Austritt von Spänen und Staub aus der Schutzhaube zu unterbinden, kann an der Schutzhaube oder am Tragelement ein Absaugstutzen angeordnet sein, von dem ein Strömungsweg in das Innere der Schutzhaube führt.

Die Erfindung wird im Nachfolgenden anhand des in den Zeichnungen dargestellten Ausführungsbeispiels näher erläutert.

Es zeigen jeweils in vereinfachter schematischer Darstellung:
- Fig. 1: eine Schnittdarstellung der erfindungsgemäßen Sicherheitseinrichtung mit einem Kreissägeblatt in Geradstellung und in einer ersten Schrägstellung;
- Fig. 2: eine Schnittdarstellung der erfindungsgemäßen Sicherheitseinrichtung mit dem Kreissägeblatt in Geradstellung und einer zweiten Schrägstellung;
- Fig. 3: einen Schnitt der Sicherheitseinrichtung entlang der Linie III-III in Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7 oder 3,2 bis 8,1 oder 5,5 bis 10.

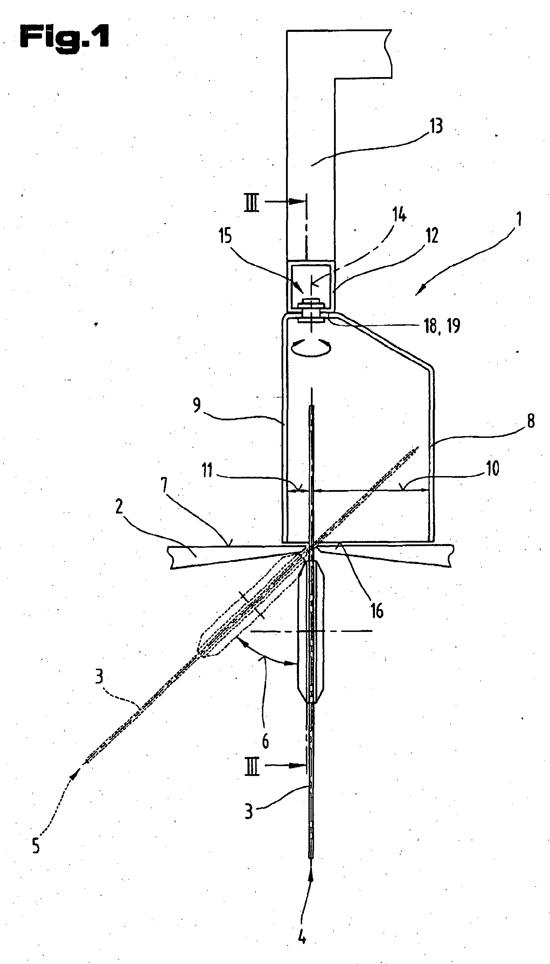

Fig. 1 zeigt einen Schnitt durch eine erfindungsgemäße Schutzhaube 1, die einen über einen Auflagetisch 2 einer Kreissäge hinausragenden Teil eines Kreissägeblatts 3 weitgehend verdeckt und dadurch eine Sicherheitseinrichtung für den Bediener der Kreissäge bildet. Das Kreissägeblatt 3 kann von einer Geradstellung 4 in eine erste Schrägstellung 5 zur Durchführung von schrägen Schnitten an einem Werkstück verstellt werden. Der mögliche Verstellwinkel 6 beträgt dabei bis zu 47°. Die Drehachse der Verstellung ist dabei vorteilhafterweise im Bereich einer Schnittlinie zwischen einer Auflagefläche 7 des Auflagetisches und der Ebene des Kreissägeblatts 3 in Geradstellung 4 angeordnet. Dadurch ist der über die Auflagefläche 7 hinausragende Teil des Kreissägeblatts 3 bei allen Verstellwinkeln 6 etwa gleich groß und eine Durchtrittsöffnung im Auflagetisch für das Kreissägeblatt 3 kann sehr schmal ausgerührt werden.

Die Schutzhaube 1 umfasst eine erste Seitenwand 8 und eine zweite Seitenwand 9, die das Kreissägeblatt 3 seitlich verdecken. Die erste Seitenwand 8 besitzt zum Kreissägeblatt 3 einen Seitenabstand 10, der größer ist, als ein Seitenabstand 11 zwischen der zweiten Seitenwand 9 und dem Kreissägeblatt 3, d.h. die erste Seitenwand 8 ist weiter vom Kreissägeblatt entfernt, als die zweite Seitewand 9. Dieser größere Seitenabstand 10 erlaubt es, das Kreissägeblatt innerhalb der Schutzhaube 1 in die Schrägstellung 5 zu verstellen, ohne dass die Schutzhaube 1 durch einen Austausch einer Seitenwand oder eine Verstellung verändert werden müsste.

Getragen wird die Schutzhaube 1 von einem Tragelement 12, das an einem verstellbaren Tragarm 13 angeordnet ist, oder auch von diesem selbst ausgebildet ist. Der verstellbare Tragarm 13 kann an der Kreissäge selbst oder auch an einem sonstigen feststehenden Punkt, wie z.B. einer Wandfläche, verankert sein.

Die Schutzhaube 1 ist am Tragelement 12 um eine zwischen den Seitenwänden 8, 9 angeordnete Schwenkachse 14 verschwenkbar gelagert. Zwischen der Schutzhaube 1 und dem Tragelement 12 ist dazu ein Schwenklager 15 ausgebildet.

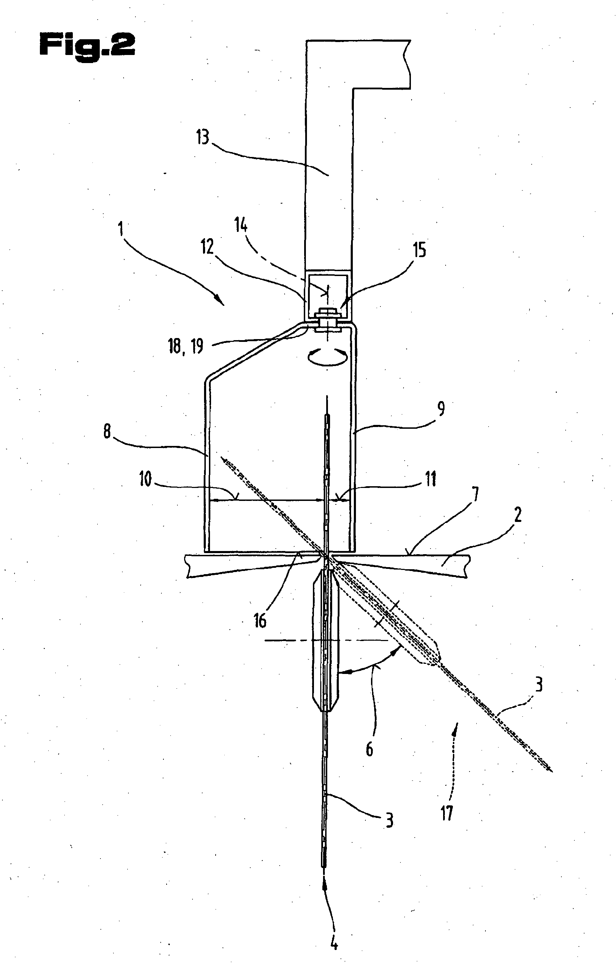

Durch dieses Schwenklager 15 kann die Schutzhaube 1 von der in Fig. 1 dargestellten ersten Arbeitsstellung in eine in Fig. 2 dargestellte zweite Arbeitsstellung verschwenkt bzw. gedreht werden, wodurch die erste Seitenwand 8 und die zweite Seitenwand 9 ihre Lage bezüglich des Kreissägeblatts 3 in Geradstellung 4 wechseln. Dazu wird die Schutzhaube 1 mit dem verstellbaren Tragarm 13 vollständig gegenüber dem Kreissägeblatt 3 angehoben, sodass eine Unterkante 16 der Schutzhaube 1 über das Kreissägeblatt 3 angehoben ist. In dieser angehobenen Stellung kann das Kreissägeblatt 3 aus seiner Geradstellung 4 oder einer ersten Schrägstellung 5 in eine zweite Schrägstellung 17 verstellt werden, wie in Fig. 2 in strichlierter Linie dargestellt. Der über die Aullagefläche 7 ragende Teil des Kreissägeblatts 3 ist dabei gegenüber der Geradstellung 4 nach links geschwenkt. Um das Kreissägeblatt 3 auch in dieser zweiten Schrägstellung 17 wieder verdecken zu können, wird die Schutzhaube 1 in angehobener Stellung mittels des Schwenklagers 15 in die in Fig. 2 dargestellte zweite Arbeitsstellung gedreht und anschließend über das Kreissägeblatt 3 abgesenkt.

Die erste Seitenwand 8 und die zweite Seitenwand 9 sind durch ein Verbindungselement 18 miteinander verbunden, das den dazwischen liegenden Abstand überbrückt. Das Verbindungselement 18 bildet gleichzeitig eine Umfangswand 19, die die Schutzhaube 1 in radialer Richtung abschließt.

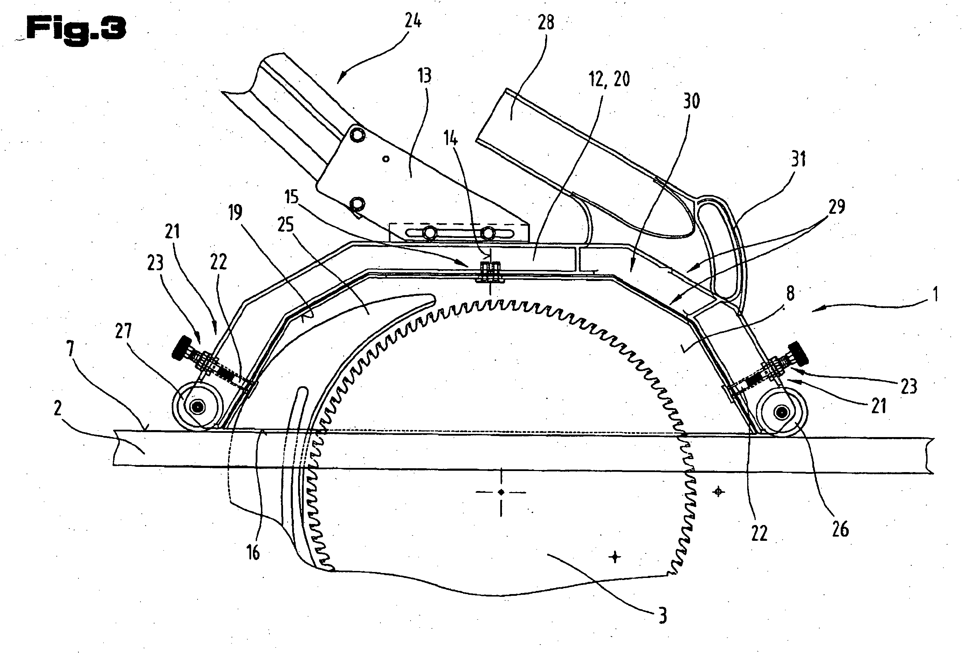

Fig. 3 zeigt einen Schnitt durch die erfindungsgemäße Schutzhaube 1 gemäß der Linie III-III. In diesem Ausführungsbeispiel ist das Tragelement 12 als Tragrahmen 20 ausgeführt, der die Schutzhaube 1 in radialer Richtung an ihrem äußeren Umfang umfasst. Die aus den Seitenwänden 8, 9 sowie der Umfangswand 19 gebildete Schutzhaube 1 ist mittels des Schwenklagers 15 schwenkbar im Tragrahmen 20 gelagert. Die Schwenkachse 14 des Schwenklagers 15 verläuft dabei etwa in radialer Richtung, bezogen auf das Kreissägeblatt 3. Die Fixierung der Schutzhaube 1 in den beiden möglichen Arbeitsstellungen ist ermöglicht durch zwei Sicherungsvorrichtungen 21, die die Drehlage der Schutzhaube 1 bezüglich des Tragrahmens 20 fixieren. Dazu weisen diese jeweils einen Sicherungsstift 22 auf, der in radialer Richtung, bezogen auf das Kreissägeblatt 3 verstellbar ist und durch ein Federelement 23 in eine Sperrstellung gedrückt wird, in der der Sicherungsstift 22 sowohl den Tragrahmen 20 als auch die Umfangswand 19 der Schutzhaube 1 durchsetzt, wodurch eine formschlüssige Fixierung erfolgt. Fig. 3 zeigt weiters den an das Tragelement 12 bzw. den Tragrahmen 20 anschließenden Tragarm 13, der in diesem Ausführungsbeispiel durch eine Parallelogrammkinematik 24 verstellbar ist.

Die Schutzhaube 1 ist zusammen mit dem Tragrahmen 20 so geformt, dass in deren Innerem neben dem Kreissägeblatt 3 auch ein Spaltkeil 25 Platz findet. Damit die Schutzhaube 1 nicht mir ihrer Unterkante 16 die Auflagefläche 7 des Auflagetisches 2 bzw. eine Oberseite eines nicht dargestellten, zu schneidenden Werkstücks berührt und dadurch beschädigen kann bzw. selbst beschädigt werden kann, ist am Tragrahmen 20 in Vorschubrichtung gesehen eine Einlaufrolle 26 sowie eine Auslaufrolle 27 angeordnet, die die Schutzhaube 1 an dem verstellbaren Tragarm 13 auf die erforderliche Höhe anheben.

Am Tragrahmen 20 ist zusätzlich ein Absaugstutzen 28 angeordnet, durch den das Innere der Schutzhaube 1 mit einer nicht dargestellten Absaugeinrichtung verbunden werden kann. Durch geeignete Durchtrittsöffnungen 29 am Tragrahmen 20 sowie 30 an der Umfangswand 19 ist ein Strömungsweg vom Inneren der Schutzhaube 1 zum Absaugstutzen 28 gebildet.

Zur Erleichterung der manuellen Verstellung der Schutzhaube 1 am verstellbaren Tragarm 13 ist an der dem Bediener zugewandten Vorderseite des Tragrahmens 20 ein Handgriff 31 ausgebildet.

### Bezugszeichenaufstellung

- 1: Schutzhaube
- 2: Auflagetisch
- 3: Kreissägeblatt
- 4: Geradstellung
- 5: Schrägstellung

- 6: Verstellwinkel
- 7: Auflagefläche
- 8: Seitenwand
- 9: Seitenwand
- 10: Seitenabstand

- 11: Seitenabstand
- 12: Tragelement
- 13: Tragarm
- 14: Schwenkachse
- 15: Schwenklager

- 16: Unterkante
- 17: Schrägstellung
- 18: Verbindungselement
- 19: Umfangswand
- 20: Tragrahmen

- 21: Sicherungsvorrichtung
- 22: Sicherungsstift
- 23: Federelement
- 24: Parallelogrammkinematik
- 25: Spaltkeil

- 26: Einlaufrolle
- 27: Auslaufrolle
- 28: Absaugstutzen
- 29: Durchtrittsöffnung
- 30: Durchtrittsöffnung

- 31: Handgriff

## Patentansprüche

1. Sicherheitseinrichtung zum zumindest teilweisen Verdecken eines aus einer Geradstellung (4) in Schrägstellung (5) neigbaren Kreissägeblattes (3) oder dgl., mit einem Tragelement (12) zur Befestigung einer Schutzhaube (1) an einem Tragarm (13), und mit einer Schutzhaube (1) umfassend zwei seitlich des Kreissägeblattes (3) angeordnete Seitenwände(8, 9), von denen eine erste Seitenwand (8) einen größeren Abstand (10) zum Kreissägeblatt (3) in Geradstellung (4) aufweist als die zweite Seitenwand (9) und dadurch das Neigen des Kreissägeblattes (3) in Richtung der ersten Seitenwand (8) erlaubt, wobei die beiden Seitenwände (8, 9) durch zumindest ein Verbindungselement (18) verbunden sind und das Verbindungselement (18) bei vom Kreissägeblatt (3) abgehobener Schutzhaube (1) um eine zwischen den Seitenwänden (8, 9) angeordnete Schwenkachse (14) verschwenkbar bezüglich des die Schutzhaube (1) tragenden Tragelements (12) gelagert ist, wodurch die erste Seitenwand (8) und die zweite Seitenwand (9) in ihrer Lage bezüglich des Kreissägeblattes (3) vertauschbar sind, **dadurch gekennzeichnet, dass** das Tragelement (12) als ein die Schutzhaube (1) an ihrem äußeren Umfang radial umfassender Tragrahmen (20) ausgebildet ist.

2. Sicherheitseinrichtung nach Anspruch 1, **dadurch gekennzeichnet, dass** das Verbindungselement (18) eine sich von der ersten Seitenwand (8) zur zweiten Seitenwand (9) erstreckende Umfangswand (19) bildet.

3. Sicherheitseinrichtung nach Anspruch 1 oder 2, **dadurch gekennzeichnet, dass** die Umfangswand (19) durch den Tragrahmen (20) gebildet ist.

4. Sicherheitseinrichtung nach einem der Ansprüche 1 bis 4, **dadurch gekennzeichnet, dass** das Verbindungselement (18) einstückig mit zumindest einer Seitenwand (8, 9) verbunden ist.

5. Sicherheitseinrichtung nach einem der Ansprüche 1 bis 3 oder 5, **dadurch gekennzeichnet, dass** die Schutzhaube (1), umfassend die erste Seitenwand (8), die Umfangswand (19) und die zweite Seitenwand (9) einstückig ausgeführt ist.

6. Sicherheitseinrichtung nach einem der Ansprüche 1 bis 6, **dadurch gekennzeichnet, dass** eine Seitenwand (8, 9) und/oder die Umfangswand (19) zumindest abschnittsweise aus transparentem Material gebildet ist.

7. Sicherheitseinrichtung nach einem der Ansprüche 1 bis 7, **dadurch gekennzeichnet, dass** die Schutzhaube (1) durch ein Kunststoffspritzgießverfahren hergestellt ist.

8. Sicherheitseinrichtung nach einem der Ansprüche 1 bis 8, **dadurch gekennzeichnet, dass** die Schwenkachse (14) zumindest annähernd in der Ebene des Kreissägeblattes (3) in Geradstellung (4) verläuft.

9. Sicherheitseinrichtung nach einem der Ansprüche 1 bis 9, **dadurch gekennzeichnet, dass** die Schwenkachse (14) rechtwinkelig zu einer Unterkante (16) der Schutzhaube (1) verläuft.

10. Sicherheitseinrichtung nach einem der Ansprüche 1 bis 10, **dadurch gekennzeichnet, dass** die Schwenklagen der Schutzhaube (1) bezüglich des Tragrahmens (20) durch eine Sicherungsvorrichtung (21) fixierbar ist.

11. Sicherheitseinrichtung nach Anspruch 11, **dadurch gekennzeichnet, dass** die Sicherungsvorrichtung (21) zumindest einen, in einer Sperrstellung den Tragrahmen (20) und die Schutzhaube (1) durchsetzenden, Sicherungsstift (22) umfasst.

12. Sicherheitseinrichtung nach Anspruch 12, **dadurch gekennzeichnet, dass** der Sicherungsstift (22) durch ein Federelement (23) in Richtung der Sperrstellung beaufschlagt im Tragrahmen (12) gelagert ist.

13. Sicherheitseinrichtung nach einem der Ansprüche 1 bis 13, **dadurch gekennzeichnet, dass** an der Schutzhaube (1) oder am Tragrahmen (20) ein Absaugstutzen (28) angeordnet ist, von dem ein Strömungsweg in das Innere der Schutzhaube (1) führt.

## Claims

1. Safety device for at least partially covering a circular saw blade (3) or the like which can be tilted from a straight position (4) into an inclined position (5), having a support element (12) for fixing a protective hood (1) to a support arm (13) and having a protective hood (1) comprising two side walls (8, 9) arranged laterally to the circular saw blade (3), of which a first side wall (8) is at a greater distance (10) from the circular saw blade (3) in the straight position (4) than the second side wall (9) and thereby allows tilting of the circular saw blade (3) in the direction of the first side wall (8), wherein the two side walls (8, 9) are connected by at least one connecting element (18) and the connecting element (18) is mounted such that, with the protective hood (1) lifted off from the circular saw blade (3), it can be swivelled with respect to the support element (12) supporting the protective hood (1) around a swivelling axis (14) arranged between the side walls (8, 9), as a result of which the first side wall (8) and the second side wall (9) can be interchanged in their position with respect to the circular saw blade (3), **characterised in that** the support element (12) is constructed as a support frame (20) which surrounds the protective hood (1) radially on its outer periphery.

2. Safety device according to claim 1, **characterised in that** the connecting element (18) forms a peripheral wall (19) extending from the first side wall (8) to the second side wall (9).

3. Safety device according to claim 1 or 2, **characterised in that** the peripheral wall (19) is formed by the support frame (20).

4. Safety device according to one of claims 1 to 4, **characterised in that** the connecting element (18) is connected as one piece to at least one side wall (8, 9).

5. Safety device according to one of claims 1 to 3 or 5, **characterised in that** the protective hood (1) is configured as one piece comprising the first side wall (8), the peripheral wall (19) and the second side wall (9).

6. Safety device according to one of claims 1 to 6, **characterised in that** a side wall (8, 9) and/or the peripheral wall (19) is formed from transparent material at least in sections.

7. Safety device according to one of claims 1 to 7, **characterised in that** the protective hood (1) is produced by a plastics injection moulding process.

8. Safety device according to one of claims 1 to 8, **characterised in that** the swivelling axis (14) runs at least approximately in the plane of the circular saw blade (3) in the straight position (4).

9. Safety device according to one of claims 1 to 9, **characterised in that** the swivelling axis (14) runs at right angles to a lower edge (16) of the protective hood (1).

10. Safety device according to one of claims 1 to 10, **characterised in that** the swivel mounting of the protective hood (1) can be fixed with respect to the support frame (20) by a securing device (21).

11. Safety device according to claim 11, **characterised in that** the securing device (21) comprises at least one securing pin (22) passing through the support frame (20) and the protective hood (1) in a locking position.

12. Safety device according to claim 12, **characterised in that** the securing pin (22) is mounted in the support frame (12) such that it is driven on by a spring element (23) in the direction of the locking position.

13. Safety device according to one of claims 1 to 13, **characterised in that** on the protective hood (1) or on the support frame (20) there is arranged a suction connector (28), from which a flow path leads into the inside of the protective hood (1).

## Revendications

1. Dispositif de sécurité permettant de recouvrir au moins en partie une lame de scie circulaire (3) ou similaire pouvant être inclinée entre une position droite (4) et une position oblique (5) comportant un élément support (12) permettant de fixer un capuchon de protection (1) sur un bras support (13) ainsi que deux parois latérales (8, 9) montées latéralement à la lame de scie circulaire (3) et entourant le capot de protection (1), parmi lesquelles une première paroi latérale (8) est située à une plus grande distance (10) de lame de scie circulaire (3) en position droite (4) que la seconde paroi latérale (9) et permet ainsi l'inclinaison de la lame de scie circulaire (3) en direction de la première paroi latérale (8), les deux parois latérales (8, 9) étant reliées par au moins un élément de liaison (18) et cet élément de liaison (18) étant, lorsque le capot de protection (1) est retiré de la lame de scie circulaire (3), monté mobile en pivotement par rapport à l'élément support (12) portant ce capot de protection (1) autour d'un axe de pivotement (14) situé entre les parois latérales (8, 9) de sorte que les positions de la première paroi latérale (8) et de la seconde paroi latérale (9) par rapport à la lame de scie circulaire (3) puissent être échangées,
**caractérisé en ce que**
l'élément support (12) est réalisé sous la forme d'un châssis support (20) entourant radialement le capot de protection (1) au niveau de sa périphérie externe.

2. Dispositif de sécurité conforme à la revendication 1,
**caractérisé en ce que**
l'élément de liaison (18) forme une paroi périphérique (19) s'étendant de la première paroi latérale (8) à la seconde paroi latérale (9).

3. Dispositif de sécurité conforme à la revendication 1 ou 2,
**caractérisé en ce que**
la paroi périphérique (19) est formée par le châssis support (20).

4. Dispositif de sécurité conforme à l'une des revendications 1 à 4,
**caractérisé en ce que**
l'élément de liaison (18) est relié en une seule pièce avec au moins une paroi latérale (8, 9).

5. Dispositif de sécurité conforme à l'une des revendications 1 à 3 ou 5,
**caractérisé en ce que**
le capot de sécurité (1) est réalisé en une seule pièce avec la première paroi latérale (8), la paroi périphérique (19) et la seconde paroi latérale (9).

6. Dispositif de sécurité conforme à l'une des revendications 1 à 3,
**caractérisé en ce que**
l'une des parois latérales (8, 9) et/ou la paroi périphérique (19) est réalisée au moins par sections en un matériau transparent.

7. Dispositif de sécurité conforme à l'une des revendications 1 à 6,
**caractérisé en ce que**
le capot de sécurité (1) est obtenu par la mise en oeuvre d'un procédé de moulage par injection de matière plastique.

8. Dispositif de sécurité conforme à l'une des revendications 1 à 7,
**caractérisé en ce que**
l'axe de pivotement (14) s'étend au moins approximativement dans le plan de la lame de scie circulaire (3) en position droite (4).

9. Dispositif de protection conforme à l'une des revendications 1 à 8,
**caractérisé en ce que**
l'axe de pivotement (14) s'étend perpendiculairement à une arête inférieure (16) du capot de protection (1).

10. Dispositif de sécurité conforme à l'une des revendications 1 à 9,
**caractérisé en ce que**
la position de pivotement du capot de protection (1) par rapport au châssis support (20) peut être bloquée par un dispositif de sécurité (21).

11. Dispositif de sécurité conforme à la revendication 10,
**caractérisé en ce que**
le dispositif de sécurité (21) comporte au moins un goujon de sécurité (22) traversant le châssis support (20) et le capot de protection (1) dans une position de blocage.

12. Dispositif de sécurité conforme à la revendication 11,
**caractérisé en ce que**
le goujon de sécurité (22) est monté dans le châssis support (12) en étant précontraint par un élément élastique (23) dans la direction de la position de blocage.

13. Dispositif de sécurité conforme à l'une des revendications 1 à 12,
**caractérisé en ce que**
sur le capot de sécurité (1) ou sur le châssis support (20) est montée une tubulure d'aspiration (28) par laquelle une voie découlement conduit à la partie interne du capot de sécurité (1).
